# EUROPEAN PATENT APPLICATION

(11) **EP 2 194 419 A1**
(43) Date of publication of application: **09.06.2010**
(21) Application number: 09177247.5
(22) Date of filing: 26.11.2009
(51) Int. Cl.: G02B 27/26, H04N 13/00

(54) **Three-dimensional image filter and display device using the same**

(30) Priority: 05.12.2008 KR 20080123509
(71) Applicant: Samsung SDI Co., Ltd., Gyeonggi-do (KR)
(72) Inventor: Hwang, Cha-Won, Gyeonggi-do (KR); Hong, Chong-Gi, Gyeonggi-do (KR); Lee, Sang-Mi, Gyeonggi-do (KR); Baek, Seung-Goo, Gyeonggi-do (KR)
(74) Representative: Walaski, Jan Filip

(57) **Abstract**

A display device that can produce a three-dimensional image for a viewer wearing polarizing spectacles. The display device includes a display panel that embodies a left-eye image and a right-eye image; a linear polarizing light layer that is provided in a front surface of the display panel and that polarizes natural light of the display panel to linearly polarized light; and a phase difference layer that is provided in the linear polarizing light layer and that polarizes the linearly polarized light to left circularly polarized light and right circularly polarized light corresponding to the left-eye image and the right-eye image, respectively.

## Description

The present invention relates to a three-dimensional image filter that can produce three-dimensional images and a display device including the image filter.

There are several methods of producing a three-dimensional image. For example, one of the methods is a liquid crystal shutter spectacle method. In order to produce a three-dimensional image, the liquid crystal shutter spectacle method requires a separate three-dimensional transmitter and receiver in addition to a display.

In the liquid crystal shutter spectacle method, because the display, the transmitter, and the receiver are required, the cost increases. Also, because the transmitter needs to be installed external to the display, it becomes inconvenient to use the spectacles and an erroneous operation may occur according to transmission and reception wavelengths.

Further, because spectacles of the liquid crystal shutter method are heavy, it is inconvenient when wearing the spectacles. In addition, the liquid crystal shutter method has a limitation in both lateral viewing angle and viewing distance.

An aspect of the present invention has been made in an effort to overcome the above-mentioned drawbacks of the liquid crystal shutter method by providing a display device and a three-dimensional image filter having the capability of viewing a three-dimensional image by wearing polarizing spectacles.

An exemplary embodiment of the present invention provides a display device including a display panel that produces a left-eye image and a right-eye image, a linear polarizing light layer arranged on a front surface of the display panel to polarize natural light from the display panel into linearly polarized light and a phase difference layer arranged on the linear polarizing light layer to convert the linearly polarized light into left circularly polarized light and right circularly polarized light corresponding to the left-eye image and the right-eye image, respectively.

The phase difference layer can include a left circular polarizing light unit to convert the linearly polarized light into the left circularly polarized light and a right circular polarizing light unit to convert the linearly polarized light into the right circularly polarized light. The display panel can include a left-eye image unit and a right-eye image unit to produce the left-eye image and the right-eye image, respectively, and wherein the left circular polarizing light unit and the right circular polarizing light unit correspond to the left-eye image unit and the right-eye image unit, respectively. The left circular polarizing light unit and the right circular polarizing light unit can be alternately arranged in a first direction and can be arranged to extend in a second direction intersecting the first direction.

The display panel can be a plasma display panel (PDP). The PDP can include a front substrate and a rear substrate arranged opposite to each other, a plurality of barrier ribs to partition a space between the front substrate and the rear substrate into a plurality of discharge cells, a plurality of address electrodes that correspond to the discharge cells and that are arranged in a first direction and a plurality of display electrodes that correspond to the discharge cells and are arranged in a second direction that intersects the first direction.

The left-eye image unit can include left-eye discharge cells that are arranged in the second direction and alternately in the first direction, and wherein the right-eye image unit can include right-eye discharge cells that are arranged in the second direction and are alternately arranged in the first direction.

According to another aspect of the present invention, there is provided a three-dimensional image filter that includes a linear polarizing light layer to polarize natural light of a left-eye image and a right-eye image into linearly polarized light and a phase difference layer arranged on the linear polarizing light layer to convert the linearly polarized light into left circularly polarized light and right circularly polarized light corresponding to the left-eye image and the right-eye image, respectively. The phase difference layer can include a left circular polarizing light unit to convert the linearly polarized light into the left circularly polarized light and a right circular polarizing light unit to convert the linearly polarized light into the right circularly polarized light. The left circular polarizing light unit and the right circular polarizing light unit can be alternately arranged in a first direction and extend as a stripe across a display panel in a second direction that intersects the first direction.

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:
FIG. 1 is an exploded perspective view of a display device according to an exemplary embodiment of the present invention;
FIG. 2 is a cross-sectional view taken along line II-II of FIG. 1;
FIG. 3 is a top plan view of the display device of FIG. 1;
FIG. 4 is a perspective view illustrating a corresponding relationship between a circularly polarized light layer and a discharge cell according to the principles of the present invention; and
FIG. 5 is a state diagram illustrating a change process of natural light, linearly polarized light, circularly polarized light, and left and right circularly polarized light.

Recognizing that sizes and thicknesses of constituent members shown in the accompanying drawings are given for better understanding and ease of description, the present invention is not limited to the illustrated sizes and thicknesses.

In the drawings, the thickness of layers, films, panels, regions, etc., are exaggerated for clarity. It will be understood that when an element such as a layer, film, region, or substrate is referred to as being "on" another element, it can be directly on the other element or intervening elements may also be present. Alternatively, when an element is referred to as being "directly on" another element, there are no intervening elements present.

In order to clarify the present invention, elements extrinsic to the description are omitted from the details of this description.

In several exemplary embodiments, constituent elements having the same configuration are representatively described in a first exemplary embodiment by using the same reference numeral and only constituent elements other than the constituent elements described in the first exemplary embodiment will be described in other embodiments.

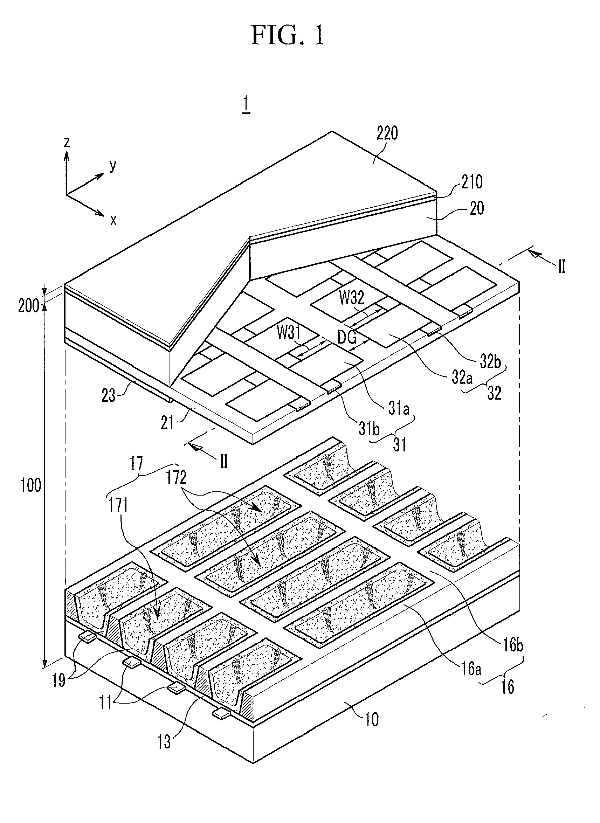

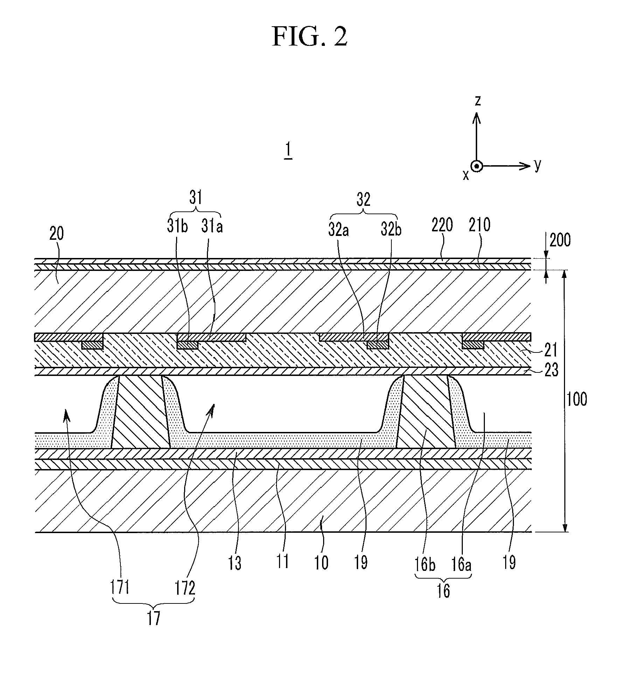

Turning now to FIGS. 1 and 2, FIG. 1 is an exploded perspective view of a display device 1 according to an exemplary embodiment of the present invention and FIG. 2 is a cross-sectional view taken along line II-II of FIG. 1. Referring to FIGS. 1 and 2, in the present exemplary embodiment, a display device 1 includes a display panel 100 and a three-dimensional image filter 200.

The display panel 100 is a display panel that individually produces a left-eye image and a right-eye image, and may be one of, for example, a plasma display panel (PDP), a liquid crystal display (LCD), or a field emission display (FED). For convenience, in the present exemplary embodiment, the PDP is exemplified as the display panel 100.

The display panel 100 includes a rear substrate 10 and a front substrate 20 that are sealed opposite to each other and barrier ribs 16 that partition the space between the substrates 10 and 20 into the discharge cells 17. A discharge gas (for example, a mixed gas including neon (Ne) and xenon (Xe), etc.) is filled within the discharge cell 17 and generates vacuum ultraviolet (VUV) rays upon discharging a gas. A phosphor layer 19 is arranged within the discharge cells 17 to absorb VUV rays and to emit visible light.

In order to produce a gas discharge, the display panel 100 includes address electrodes 11 that are disposed to correspond to rows of discharge cells 17 and are located between the rear substrate 10 and the front substrate 20. The display panel 100 also includes display electrodes, i.e. a first electrodes (hereinafter, referred to as a "sustain electrode") 31 and a second electrodes (hereinafter, referred to as a "scan electrode") 32.

For example, the address electrodes 11 extend in a first direction (a y-axis direction in the drawing) on an inner surface of the rear substrate 10 and are continuously extend along a row of discharge cells 17 in the y-axis direction. A first dielectric layer 13 covers the address electrodes 11 and an inner surface of the rear substrate 10. The first dielectric layer 13 prevents positive ions or electrons from directly colliding with the address electrodes 11 upon discharging a gas, and thus prevents damage to the address electrodes 11 and provides space for forming and accumulating wall charges.

Since the address electrodes 11 are disposed on the rear substrate 10, the address electrodes 11 do not impede the propagation of visible light from being radiated to the front. As a result, the address electrodes 11 can be made out of a highly conductive and opaque metal.

The barrier ribs 16 are formed on the first dielectric layer 13 of the rear substrate 10 to partition the discharge cells 17. The barrier ribs 16 include first barrier rib members 16a that extend in a y-axis direction and second barrier rib members 16b that in an x-axis direction to cross the first barrier rib members 16a. Therefore, the discharge cells 17 form a matrix structure.

Alternatively, the barrier ribs 16 can include only the first barrier rib members 16a that extend in the y-axis direction. In such a scenario, the discharge cells 17 can have a striped shape (not shown).

The phosphor layer 19 is arranged in each discharge cell 17 and is produced by coating, drying, and baking phosphor paste on a surface of the first dielectric layer 13 and on side surfaces of the barrier ribs 16.

The phosphor layer 19 is formed with phosphors that produce visible light of the same color in a row of discharge cells 17 that extend in the y-axis direction. For a row of discharge cells 17 that are disposed in an x-axis direction, the phosphor layer 19 in each discharge cell alternates repeatedly between three phosphors that produce visible light of red (R), green (G), and blue (B).

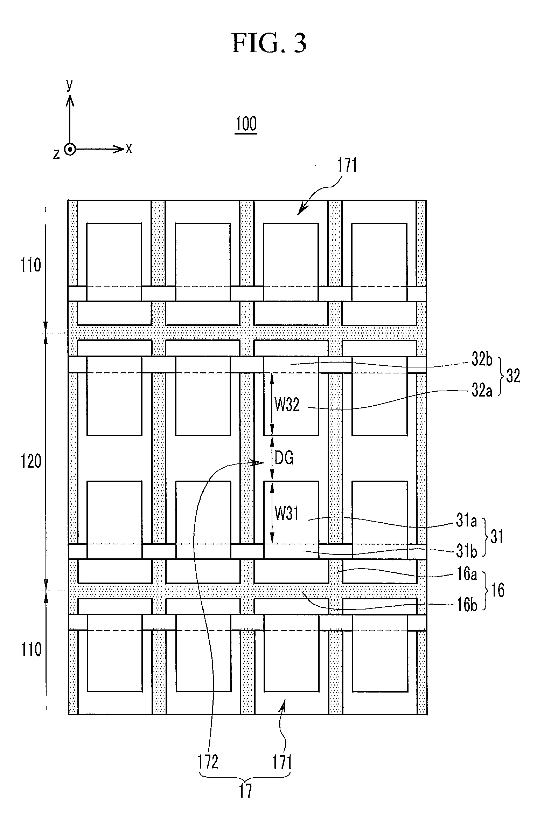

Turning now to FIG. 3, FIG. 3 is a top plan view of the display device 1 of FIG. 1. Referring to FIG. 3, the sustain electrodes 31 and the scan electrodes 32 extend in a second direction (an x-axis direction in the drawing) intersecting a first direction, are arranged on an inner surface of the front substrate 20 and extend continuously along a row of discharge cells 17 in the x-axis direction. Further, the sustain electrodes 31 and the scan electrodes 32 are of a surface discharge structure that corresponds to each discharge cell 17 and that is opposite to each other in a y-axis direction.

The sustain electrodes 31 and the scan electrodes 32 include transparent electrodes 31a and 32a that cause discharge and bus electrodes 31b and 32b that apply voltage signals to the transparent electrodes 31a and 32a, respectively. The transparent electrodes 31a and 32a are portions that cause surface discharge within the discharge cells 17 and are made out of a transparent material (for example, indium tin oxide (ITO)) in order to secure an adequate aperture ratio for the discharge cells 17.

The bus electrodes 31b and 32b are made out of a metal material having excellent electrical conductivity in order to counteract the high electrical resistance of the transparent electrodes 31a and 32a. The transparent electrodes 31a and 32a protrude toward the centers of discharge cells from an outer side of the discharge cells 17 in a y-axis direction, have widths W31 and W32, respectively, and form a discharge gap (DG) at a central portion of each discharge cell 17.

The bus electrodes 31b and 32b are disposed on the transparent electrodes 31a and 32a, respectively at an outer side of the y-axis direction of the discharge cells 17 and extend in an x-axis direction. When voltage signals are applied to the bus electrodes 31b and 32b, the voltage signals are applied to the transparent electrodes 31a and 32a that are connected to the bus electrodes 31b and 32b.

Referring now to FIGS. 1 and 2, a second dielectric layer 21 covers an inner surface of the front substrate 20, the sustain electrodes 31 and the scan electrodes 32. The second dielectric layer 21 protects the sustain electrodes 31 and the scan electrodes 32 from gas discharge and provides space for forming and accumulating wall charges upon discharging.

A protective layer 23 covers the second dielectric layer 21. For example, the protective layer 23 includes transparent MgO that protects the second dielectric layer 21 and increases a secondary electron emission coefficient upon discharging.

For example, when driving the display panel 100, in a reset period, a reset discharge occurs by applying reset pulses to the scan electrodes 32. In a scan period (an address period) following the reset period, an address discharge occurs by applying scan pulses to the scan electrodes 32 and address pulses to the address electrodes 11. Thereafter, in a sustain period, a sustain discharge occurs by applying sustain pulses to the sustain electrodes 31 and the scan electrodes 32.

The sustain electrodes 31 and the scan electrodes 32 serve to supply sustain pulses necessary for sustain discharge. The scan electrodes 32 serve to supply reset pulses and scan pulses. The address electrodes 11 serve to supply address pulses. The sustain electrodes 31, the scan electrodes 32, and the address electrodes 11 can perform different functions according to voltage waveforms that are applied to each thereof, and thus the sustain electrodes 31, the scan electrodes 32, and the address electrodes 11 are not limited to the above functions.

The display panel 100 selects discharge cells 17 to be turned on during the address period by the address discharge produced by an interaction between the address electrodes 11 and the scan electrodes 32. The display panel 100 drives the discharge cells 17 that have been selected during the address period for sustain discharge due to an interaction between the sustain electrodes 31 and the scan electrodes 32 that are disposed at the selected discharge cells 17, thereby producing an image. As a result, the display panel 100 generates unbiased natural light, ie. unpolarized light.

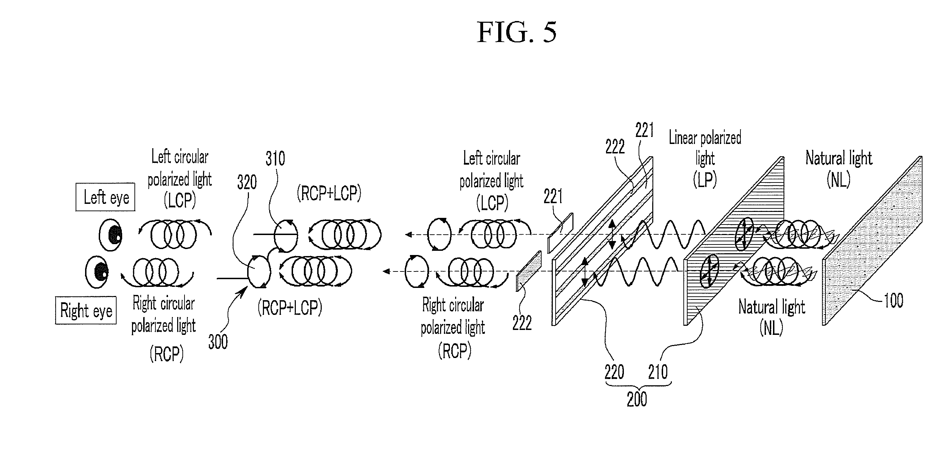

The three-dimensional image filter 200 is attached to an outer surface of the front substrate 20 of the display panel 100. The three-dimensional image filter 200 polarizes natural light NL that is radiated from the display panel 100 into linearly polarized light LP, polarizes again the linearly polarized light LP into left and right circularly polarized light LCP and RCP, thereby displaying a three-dimensional image for a viewer wearing polarizing spectacles 300 (see FIG. 5).

For this purpose, the three-dimensional image filter 200 includes a linear polarizing light layer 210 and a phase difference layer 220 that are provided on the front of the front substrate 20. The linear polarizing light layer 210 polarizes the natural light NL produced by the display panel 100 into the linearly polarized light LP. The phase difference layer 220 includes a phase difference film and polarizes the linearly polarized light LP by λ/4. In other words, the linearly polarized light LP is polarized into the left and right circularly polarized light LCP and RCP by phase difference layer 220.

Further, referring to FIG. 3, in order to produce a three-dimensional image, the display panel 100 includes a left-eye image unit 110 and a right-eye image unit 120 that produces different left-eye images and right-eye images, respectively. The left-eye images that are radiated from the left-eye image unit 110 eventually becomes polarized into left circularly polarized light LCP and received by the left-eye of the viewer. The right-eye images that are radiated from the right-eye image unit 120 eventually becomes polarized into right circularly polarized light RCP and is received by the right-eye of the viewer.

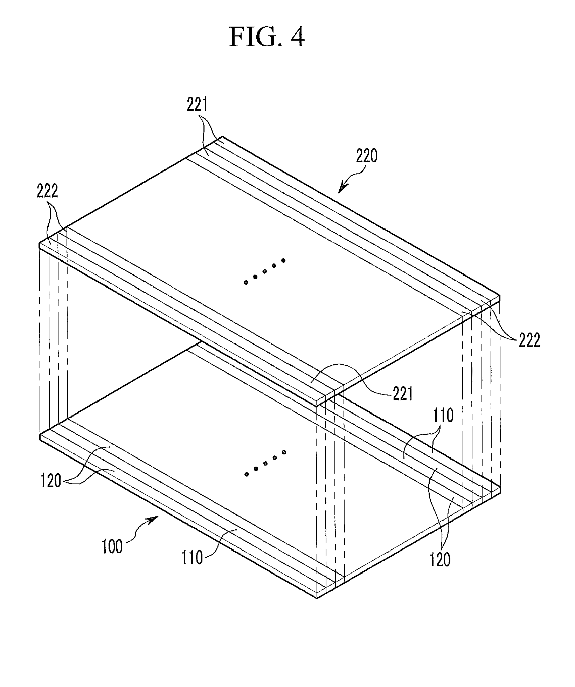

Turning now to FIG. 4, FIG. 4 is a perspective view illustrating a corresponding relationship between phase difference layer 220 and the discharge cells 17. Referring to FIG. 4, in the display panel 100, the left-eye image unit 110 and the right-eye image unit 120 extend along the x-axis direction and are arranged alternately in the y-axis direction.

Referring back to FIG. 3, specifically, the left-eye image unit 110 includes a row of left-eye discharge cells 171 that extend in an x-axis direction, and the right-eye image unit 120 includes a row of right-eye discharge cells 172 that extend in the x-axis direction. As illustrated in FIG. 3, the discharge cells 17 include left-eye discharge cells 171 and right-eye discharge cells 172. The left-eye discharge cells 171 and the right-eye discharge cells 172 are arranged in rows that extend in an x-axis direction and are arranged alternately in the y-axis direction. For example, the left-eye discharge cells 171 of the left-eye image unit 110 produce a short distance image, and the right-eye discharge cells 172 of the right-eye image unit 120 produce a long distance image.

In the three-dimensional image filter 200 of FIG. 4 corresponding to the display panel 100, the phase difference layer 220 includes a left circular polarizing light unit 221 and a right circular polarizing light unit 222. As shown in FIG. 4, in the phase difference layer 220, the left circular polarizing light unit 221 corresponds to the left-eye image unit 110, and the right circular polarizing light unit 222 corresponds to the right-eye image unit 120. In other words, the left circular polarizing light unit 221 and the right circular polarizing light unit 222 are alternately disposed in a y-axis direction while extending in a row across the display along the x-axis direction. Therefore, the left circular polarizing light unit 221 circularly polarizes the linearly polarized light LP that is polarized by the linear polarizing light layer 210 into the left circularly polarized light LCP. The right circular polarizing light unit 222 circularly polarizes the linearly polarized light LP that is linearly polarized by the linear polarizing light layer 210 into the right circularly polarized light RCP.

Turning now to FIG. 5, FIG. 5 is a state diagram illustrating a change process of natural light, linearly polarized light, circularly polarized light, and left and right circularly polarized light. Referring to FIG. 5, the display panel 100 radiates unbiased natural light NL. In this case, the display panel 100 radiates a left-eye image and a right-eye image from the left-eye image unit 110 and the right-eye image unit 120, respectively.

The linear polarizing light layer 210 produces linearly polarized light LP by polarizing natural light NL of the left-eye image and the right-eye image. The phase difference layer 220 produces left circularly polarized light LCP and right circularly polarized light RCP to correspond to the left-eye image and the right-eye image, respectively by polarizing the linearly polarized light LP by λ/4. In this case, the left circular polarizing light unit 221 produces the left circularly polarized light LCP, and the right circular polarizing light unit 222 produces the right circularly polarized light RCP.

The left circularly polarized light LCP and the right circularly polarized light RCP reach a left circular polarizing light lens 310 and a right circular polarizing light lens 320 of the polarizing spectacles 300. However, the left circular polarizing light lens 310 blocks the right circularly polarized light RCP and passes through only the left circularly polarized light LCP. Further, the right circular polarizing light lens 320 blocks the left circularly polarized light LCP and passes through only the right circularly polarized light RCP. Therefore, in a left-eye of a viewer, the left circularly polarized light LCP, which is a short distance image, is recognized, and in a right-eye of a viewer, the right circularly polarized light RCP, which is a long distance image, is recognized, and thus a viewer can view a three-dimensional image.

As described above, according to an exemplary embodiment of the present invention, as a three-dimensional image filter includes a linear polarizing light layer and a phase difference layer, the three-dimensional image filter can polarize natural light that is radiated from a display panel into linearly polarized light and polarize the linearly polarized light into left and right circularly polarized light.

The natural light of the display panel is polarized while passing through the linear polarizing light layer, thereby forming linearly polarized light. The linearly polarized light becomes left and right circularly polarized light while passing through left and right circular polarizing light units of the phase difference layer. The left and right circularly polarized light forms left and right circularly polarized light while passing through left and right circular polarizing light lens, respectively of polarizing spectacles. The left and right circularly polarized light is divided and reaches left and right eyes, respectively of a viewer. Therefore, the viewer can view a three-dimensional image.

While this invention has been described in connection with what are presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A three-dimensional image filter (200) comprising:
a linear polarizing light layer (210) to polarize natural light for a left-eye image and a right-eye image into linearly polarized light; and
a phase difference layer (220) arranged on the linear polarizing light layer to convert the linearly polarized light into left circularly polarized light corresponding to the left-eye image and right circularly polarized light corresponding to the right-eye image.

2. The three-dimensional image filter of claim 1, wherein the phase difference layer (220) comprises:
a left circular polarizing light unit (221) to convert the linearly polarized light into the left circularly polarized light; and
a right circular polarizing light unit (222) to convert the linearly polarized light into the right circularly polarized light.

3. The three-dimensional image filter of claim 2, wherein the left circular polarizing light unit and the right circular polarizing light unit are alternately arranged in a first direction and extend as a stripe across the phase difference layer in a second direction that intersects the first direction.

4. A display device, comprising:
a display panel (100) that produces a left-eye image and a right-eye image; and
a three dimensional image filter (200) according to any one of the preceding claims.

5. The display device of claim 4, wherein the display panel comprises a left-eye image unit (110) and a right-eye image unit (120) to produce the left-eye image and the right-eye image, respectively, and wherein the left circular polarizing light unit (221) and the right circular polarizing light unit (222) correspond to the left-eye image unit and the right-eye image unit, respectively.

6. The display device of claim 4 or 5, wherein the display panel comprises a plasma display panel (PDP).

7. The display device of any one of claims 4 to 6, wherein the PDP comprises
a front substrate and a rear substrate arranged opposite to each other;
a plurality of barrier ribs to partition a space between the front substrate and the rear substrate into a plurality of discharge cells;
a plurality of address electrodes that correspond to the discharge cells and that are arranged in a first direction; and
a plurality of display electrodes that correspond to the discharge cells and are arranged in a second direction that intersects the first direction.

8. The display device of claim 7, wherein the left-eye image unit (110)
comprises a plurality of left-eye discharge cells (171) that are arranged in the second direction and alternately in the first direction, and wherein the right-eye image unit (120) comprises a plurality of right-eye discharge cells (172) that are arranged in the second direction and are alternately arranged in the first direction.

9. A system for viewing three dimensional images, comprising:
a display device according to any one of claims 4 to 8; and
polarizing glasses (300) for viewing images produced by the display device, wherein the polarizing glasses comprise:
a left circular polarizing light lens (310) for blocking right circularly polarized light; and
a right circular polarizing light lens (320) for blocking left circularly polarized light.
